# FASCICULE DE BREVET EUROPEEN

(11) **EP 1 961 513 B1**
(45) Date de publication et mention de la délivrance du brevet: **07.04.2010**
(21) Numéro de dépôt: 08151481.2
(22) Date de dépôt: 15.02.2008
(51) Int. Cl.: B23K 26/34, B23K 26/42, B23K 26/06, B23P 15/02, F01D 25/24, B23P 6/00

(54) **Procédé de rechargement d'une pièce en alliage d'aluminium**
Auftragsschweißverfahren eines Werkstücks in Aluminiumlegierung
Method of recharging an aluminium alloy part

(30) Priorité: 20.02.2007 FR 0753366
(43) Date de publication de la demande: 27.08.2008
(73) Titulaire: SNECMA, 75015 Paris (FR)
(72) Inventeur: Chau, Cathy, 78370 Plaisir (FR); Duverneuil, Katia, 77210 Avon (FR)
(74) Mandataire: Besnard, Christophe Laurent

(56) Documents cités:
- EP-A- 1 674 595
- DE-A1- 10 032 975
- US-A- 3 465 426
- US-A1- 2001 006 722
- DATABASE WPI Week 199823 Derwent Publications Ltd., London, GB; AN 1998-254848 XP002453817 -& JP 10 080827 A (ISHIKAWAJIMA HARIMA HEAVY IND) 31 mars 1998 (1998-03-31)
- DATABASE WPI Week 198846 Derwent Publications Ltd., London, GB; AN 1988-328415 XP002479043 -& SU 1 391 816 A (CABLE IND TECH) 30 avril 1988 (1988-04-30)

## Description

L'invention concerne un procédé de rechargement d'une pièce en alliage d'aluminium.

Le document DE 10032975 A1 divulgue un procédé de soudage de pièces en aluminium. Ce document décrit un procédé de rechargement d'une pièce en Aluminium avec dépose manuelle d'une couche de poudre en alliage d'Aluminium sur la pièce dans une zone de rechargement, et soudure laser sur ladite pièce par soudage laser.

De manière générale, le rechargement d'une pièce consiste à rapporter de la matière (sous forme de poudre, de fritté...) à des endroits où la pièce présente des fissures (ou criques) et/ou des renfoncements. Pour cela, on utilise le plus souvent des techniques de soudage ou de brasage.

Le procédé de l'invention peut être utilisé, notamment, pour recharger une pièce de turbomachine (e.g. turboréacteur, turbopropulseur, turbine à gaz terrestre...) et, plus particulièrement, un carter de soufflante de turboréacteur.

Les carters de soufflante de turboréacteur sont réalisés le plus souvent en alliage d'aluminium et subissent des endommagements pendant leur fabrication (coups d'outils) ou durant le fonctionnement du turboréacteur (ingestion de cailloux ou autres projectiles qui viennent taper contre le carter). De manière générale, il est difficile de recharger ces carters par soudage car la soudabilité des alliages d'aluminium utilisés est assez limitée, ces alliages ayant une très forte conductivité thermique et une grande réflectivité.

Parmi les procédés connus, on connaît le rechargement par soudage T.I.G. (pour Tungsten Inert Gas). Ce procédé présente néanmoins des inconvénients: la zone de la pièce affectée thermiquement par le soudage est trop étendue et présente des déformations importantes. De plus, avant de pouvoir procéder au rechargement, il est nécessaire de démonter le carter de soufflante pour le séparer du reste du module de compresseur basse pression (également appelé module soufflante et booster) du turboréacteur, car l'arc électrique généré lors du soudage T.I.G. endommagerait les roulements encore assemblés.

L'invention a pour objectif de proposer un procédé de rechargement d'une pièce, par soudage, qui induise une zone affectée thermiquement limitée et de faibles déformations dans la zone de rechargement et qui, en outre, puisse être utilisé pour recharger un carter de soufflante de turboréacteur sans qu'il soit nécessaire de démonter ce carter.

Pour atteindre cet objectif, l'invention a pour objet un procédé de rechargement d'une pièce en alliage d'aluminium, par soudage, tel que défini dans la revendication 1.

Ce procédé comprend, notamment, les étapes suivantes:
- on dépose manuellement une couche de poudre en alliage d'aluminium sur la pièce, dans une zone de rechargement; et
- on soude ladite couche de poudre sur ladite pièce par soudage laser.

On a pu constater que le soudage laser effectué induisait une zone affectée thermiquement et des déformations moins importantes que celles induites par un soudage T.I.G.

En outre, du fait du dépôt manuel de la poudre, l'appareillage nécessaire pour la mise en oeuvre d'un tel procédé est de faible encombrement. Ceci permet d'accéder facilement à la pièce à recharger, même lorsque celle-ci est assemblée avec d'autres pièces. Plus particulièrement, ceci permet d'accéder au carter de soufflante d'un turboréacteur lorsque celui-ci est encore intégré au module de compresseur. Avantageusement, on procède donc au rechargement du carter de soufflante sans démonter celui-ci par rapport au reste du module de compresseur du turboréacteur, ce qui permet de gagner un temps précieux. De plus, aucun arc électrique n'étant généré par le soudage laser, on ne risque pas d'endommager les roulements.

L'invention et ses avantages seront mieux compris à la lecture de la description de'taillée qui suit, d'exemples de mise en oeuvre du procédé de l'invention. Cette description fait référence aux figures annexées sur lesquelles:
- la figure 1 représente schématiquement, en coupe, un exemple de pièce à recharger ;
- les figures 2 à 5 représentent schématiquement différentes étapes d'un exemple d'un procédé non couvert par la présente invention, appliqué à la pièce de la figure 1;
- la figure 6 est une vue en perspective d'un exemple de raclette.
- la figure 7 représente schématiquement en perspective, un exemple de pièce à recharger, revêtue d'un cache ; et
- les figures 8 à 11 représentent schématiquement les différentes étapes du procédé selon l'invention appliqué à la pièce de la figure 7.

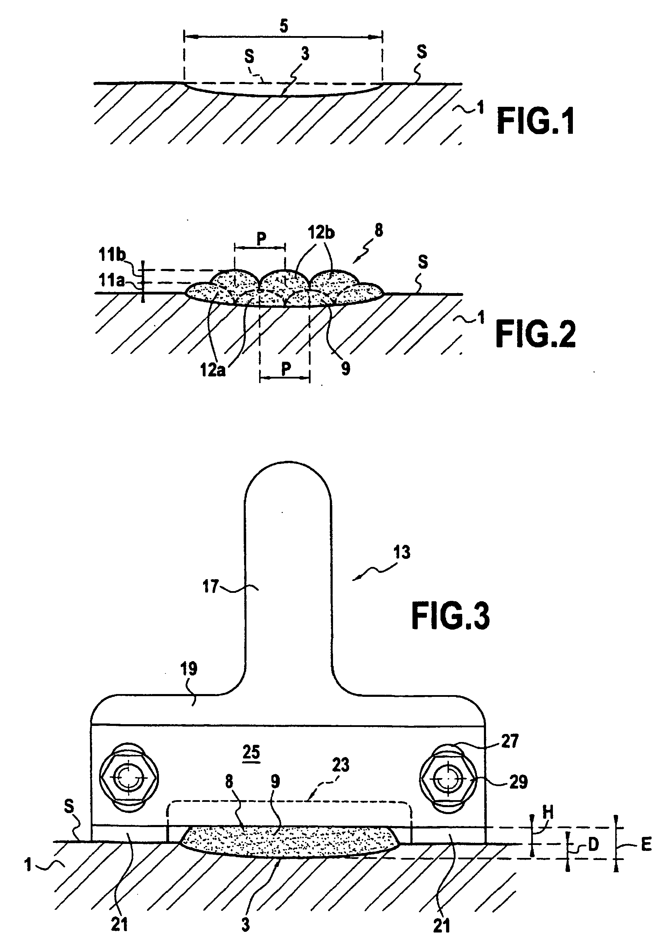

En référence aux figures 1 à 5, on va décrire un procédé non couvert par la présente invention, utilisé pour reboucher un renfoncement 3 en forme de cuvette dans une pièce 1, représentée en coupe sur la figure 1. La pièce 1 est un carter de soufflante d'un turboréacteur double-corps double flux, et appartient au module de compresseur basse pression du turboréacteur qui comprend, en outre, la soufflante (ou fan) et le compresseur basse pression (ou booster).

La zone de rechargement 5 de la pièce 1 correspond avec l'étendue du renfoncement 3. Par ailleurs, lorsqu'il est fait référence à la surface de la pièce on entend désigner la surface générale S de cette pièce. Dans la zone de rechargement 5, la surface S ne correspond donc pas au fond du renfoncement 3 mais, comme représenté en pointillés sur la figure 1, à la surface S de la pièce lorsque celle-ci ne présentait pas le renfoncement 3.

On dépose manuellement une couche 8 de poudre 9 en alliage d'aluminium sur la pièce 1, dans la zone de rechargement 5.

Pratiquement, pour obtenir la couche 8 on peut procéder aux dépôts successifs d'au moins deux sous-couches 11a, 11b, formées chacune de plusieurs cordons de poudre 9 parallèles et espacés d'un pas P.

Par exemple, pour recharger la pièce 1, on dépose la première sous-couche 11a formée de cordons 12a espacés d'un pas P, et on dépose ensuite la deuxième sous-couche 11b formée de cordons 12b espacés du même pas P mais décalés d'une distance P/2 par rapport aux cordons 12a.

La juxtaposition de sous-couches de cordons de poudre 9 permet d'obtenir une couche 8 bien densifiée et d'épaisseur relativement stable.

On calibre la hauteur H de la couche 8 de poudre par rapport à la surface S de la pièce 1. De cette manière, on contrôle l'épaisseur E de la couche 8 à déposer, cette épaisseur E ayant une influence sur la qualité du soudage laser réalisé. En effet, si cette épaisseur était trop faible, un manque de matière en surface apparaîtrait.

Pour une profondeur D de renfoncement (ou de fissure) donnée, par rapport à la surface S de la pièce 1, l'épaisseur E de la couche 8 est égale à D+H où H est la hauteur de la couche 8 par rapport à la surface S de la pièce 1. En calibrant la hauteur H, on contrôle donc l'épaisseur E.

Cette étape de calibrage a lieu, bien entendu, après l'étape de dépôt de la couche de poudre et avant l'étape de soudage au laser.

Pour réaliser cette étape de calibrage, on utilise, avantageusement, une raclette comprenant au moins un pied d'appui que l'on fait reposer sur la surface S de ladite pièce, et une lame de raclage située en retrait par rapport au pied d'appui de sorte que la distance d entre cette lame de raclage et la surface de ladite pièce corresponde à la hauteur H souhaitée pour la couche de poudre 8.

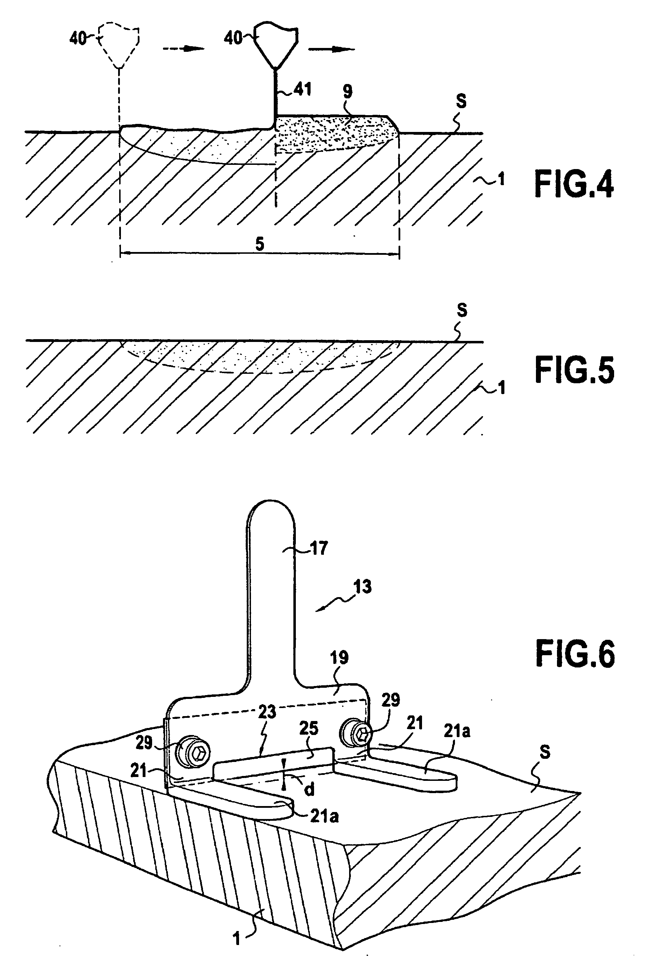

Un exemple de raclette 13 est représenté sur les figures 3 et 6. La raclette 13 repose sur la surface S horizontale de la pièce 1 et comprend un manche 17 relié au corps 19 de la raclette. Ce corps 19 présente deux pieds d'appui latéraux 21 (symétriques par rapport au plan vertical moyen de la raclette) qui s'étendent d'abord verticalement vers le bas et ensuite sont coudés à 90° de manière à former deux bandes d'appui 21a horizontales. Lorsqu'on utilise la raclette 13, on fait glisser ces bandes d'appui 21a sur la surface S. Les pieds d'appui 21 définissent entre eux dans un plan vertical une large échancrure 23. Une lame de raclage 25 est montée sur le corps 19 et recouvre partiellement l'échancrure 23. Cette lame 25 est apte à coulisser verticalement par rapport au corps 19 de sorte qu'il est possible de régler la position verticale de la lame 25 et, ainsi, la distance d entre la lame de raclage 25 et la surface S de la pièce 1 pour qu'elle corresponde à une valeur déterminée de hauteur H de couche de poudre.

Dans cet exemple, la lame 25 présente deux ouvertures oblongues 27 orientées verticalement et la raclette comprend deux ensembles vis/écrou 29 qui sont fixés dans le corps 19 et respectivement à travers les ouvertures 27.

Pour régler la distance d et la faire correspondre avec la hauteur H on desserre les ensembles vis/écrou 29, on déplace la lame 25 jusque dans la position souhaitée, et on resserre les ensembles 29.

Lorsqu'on utilise la raclette 13, on positionne les pieds d'appui 21 de chaque côté de la couche 8 de poudre (voir figure 3), on plaque les bandes d'appui 21a contre la surface S, et on déplace manuellement la raclette en faisant glisser ces bandes d'appui sur la surface S. Grâce aux bandes d'appui 21a, l'orientation (ici verticale) de la lame 25 reste la même lorsqu'on déplace la raclette 13 de sorte que la distance d entre cette lame 25 et la surface S de la pièce 1 reste constante.

En passant la raclette 13 sur la couche 8 de poudre, comme représenté sur la figure 3, on lisse la partie supérieure de la couche 8 de poudre à une hauteur H calibrée : les grains de poudre 9 situés à une hauteur supérieure à la hauteur H étant déplacés par la lame 25 vers les zones de la couche 8 de hauteur inférieure à la hauteur H ou à la périphérie de cette couche 8.

Après avoir déposé la couche 8 et avoir avantageusement calibré la hauteur de celle-ci, on procède à l'étape de soudage laser.

Pour cette étape, on utilise par exemple un laser à diode 40 offrant une interaction faisceau/matière plus régulière qu'un laser de type Y.A.G. (pour Yttrium Aluminium Garnet).

Le faisceau laser 41 émis parcourt ensuite la zone de rechargement 5, comme représenté sur la figure 4. L'énergie apportée par le faisceau 41 provoque la fusion et le mélange de la poudre 9 et des parties de la pièce 1 limitrophes. Après refroidissement, on obtient le rechargement souhaité.

Selon un mode de mise en oeuvre, après l'étape de soudage, pour restaurer les propriétés aérodynamiques de la pièce 1, on arase par usinage la pièce dans la zone de rechargement 5, car la surface de la pièce 1 dans cette zone n'est généralement pas parfaitement plane après le soudage. La figure 5 montre la pièce finale, obtenue après l'étape d'usinage.

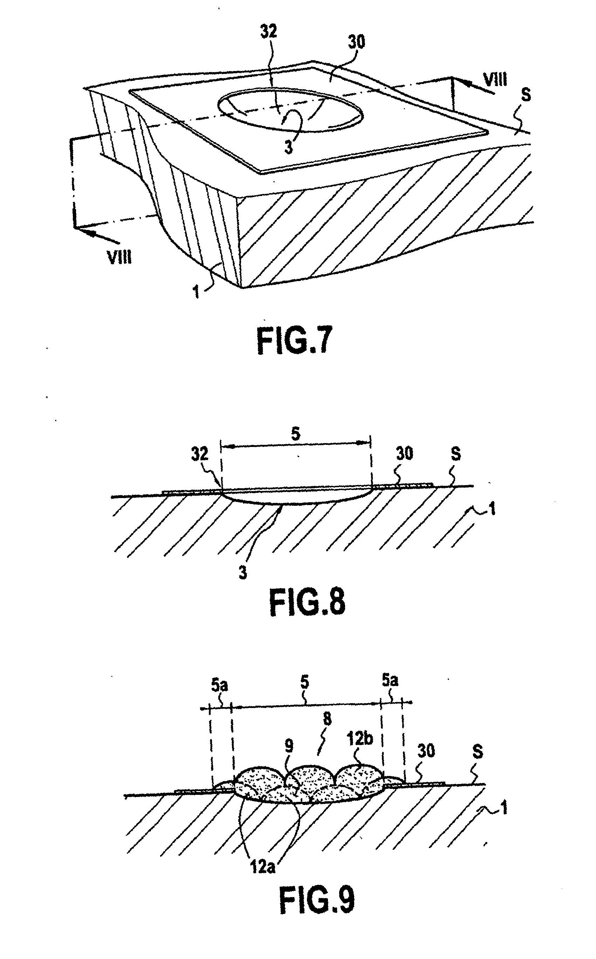

En référence aux figures 7 à 12, on va maintenant décrire un procédé de rechargement selon l'invention. Il diffère de celui des figures 2 à 5 par l'utilisation d'un cache 30. Ce cache 30 est représenté en perspective sur la figure 7 et en coupe sur la figure 8. Il s'agit, par exemple, d'une tôle en alliage d'aluminium.

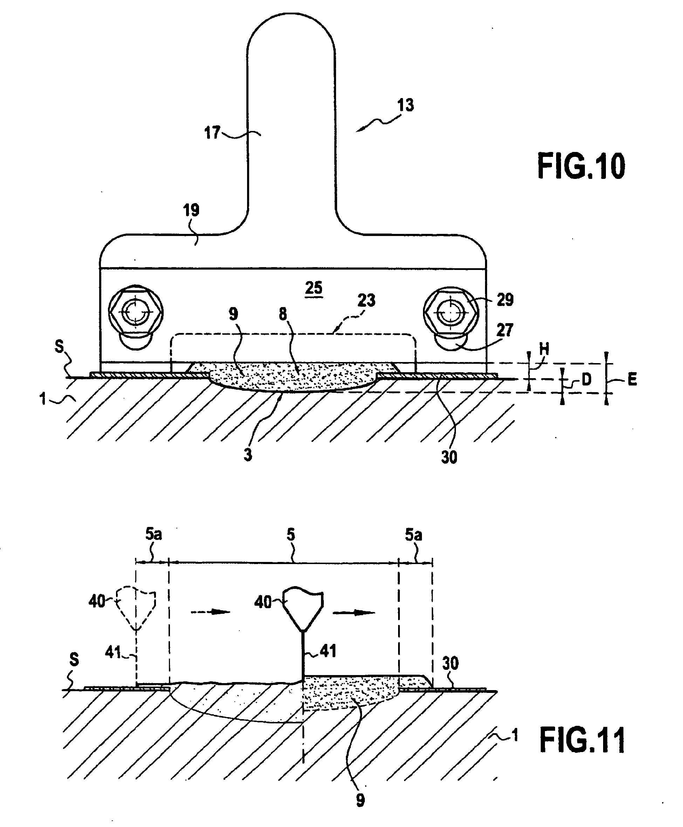

Le cache 30 est pourvu d'une ouverture 32 de même dimension que la zone de rechargement 5. On positionne le cache 30 sur ladite pièce en faisant correspondre ladite ouverture 32 avec la zone de rechargement 5, et on dépose ladite couche 8 de poudre en alliage d'aluminium dans la zone de rechargement 5, en débordant sur le cache 30 (voir figure 9). La zone de débordement est repérée 5a sur les figures 9 et 11.

On procède ensuite au raclage de la couche 8 et au soudage laser, comme représenté sur les figures 10 et 11. Ces étapes sont analogues à celles décrites précédemment et représentées sur les figures 3 et 4.

Dans le procédé des figures 2 à 5, la périphérie de la couche de poudre 8 correspond sensiblement à celle de la zone de rechargement 5 et l'interaction entre le faisceau laser 41 et la pièce 1 dans la zone de transition entre la zone de rechargement 5 et le reste de la pièce 1 peut créer des microfissures. De telles microfissures sont gênantes dans la mesure où elles se situent à la (proche) périphérie de la zone de rechargement 5, voire dans la zone de rechargement 5, et risquent de fragiliser cette dernière.

En faisant déborder la couche 8 de poudre sur le cache 30, conformément à la présente invention, la périphérie de la couche 8 est déportée à l'extérieur de la périphérie de la zone de rechargement 5. Si des microfissures se créent lors du soudage, elles sont localisées à la périphérie de la zone de débordement 5a et sont ainsi suffisamment éloignées de la zone de rechargement 5 pour ne pas fragiliser celle-ci.

Après l'étape de soudage, on retire le cache 30 et la poudre 9 de la zone de débordement 5a soudée au cache 30. Sur la pièce 1, il ne reste de la poudre soudée que dans la zone de rechargement 5. On peut alors, si nécessaire, araser par usinage la pièce dans la zone de rechargement 5.

Dans les exemples précités, la pièce 1 peut, par exemple, être réalisée en alliage d'aluminium de type 6061 et la poudre 9 en alliage d'aluminium de type 5356 avec une granulométrie comprise entre 63 et 125 microns, centrée autour de 70 microns. Pour recharger une telle pièce 1 lorsqu'elle présente un renfoncement de profondeur maximale D égale à 0,75 mm, on choisit une hauteur H de poudre par rapport à la surface S égale à 1,4 mm. La puissance du laser à diodes 40 utilisé est de 2750 Watts de manière à obtenir une bonne régularité de surface dans la zone de rechargement et une zone de dilution de profondeur satisfaisante. La zone de dilution est la zone de mélange entre le matériau d'apport (i.e. la poudre 9) et le substrat (i.e. la pièce 1). On veut en effet que la profondeur de la zone de dilution ne soit pas trop élevée et reste, de référence, inférieure à 0,05 mm. La vitesse de déplacement du laser est de 1 m/min. Le cache 30 éventuellement utilisé est une tôle en alliage d'aluminium de type 5182.

## Revendications

1. Procédé de rechargement d'une pièce (1) en alliage d'aluminium, par soudage, dans lequel:
- on utilise un cache (30) pourvu d'une ouverture (32) de mêmes dimensions qu'une zone de rechargement (5) de ladite pièce (1) ;
- on positionne le cache (30) sur ladite pièce (1) en faisant correspondre ladite ouverture (32) avec la zone de rechargement (5) ;
- on dépose manuellement une couche (8) de poudre en alliage d'aluminium sur la pièce, dans la zone de rechargement (5), en débordant sur ledit cache (30) autour de la zone de rechargement (5) ;
- on calibre la hauteur (H) de la couche de poudre par rapport à la surface (S) de ladite pièce (1), cette hauteur (H) étant supérieure à l'épaisseur dudit cache (30); et
- on soude ladite couche de poudre sur ladite pièce par soudage laser.

2. Procédé selon la revendication 1, dans lequel on calibre la hauteur (H) de la couche (8) de poudre au moyen d'une raclette (13) comprenant au moins un pied d'appui (21) que l'on fait reposer sur la surface (S) de ladite pièce (1), et une lame de raclage (25) située en retrait par rapport au pied d'appui de sorte que la distance (d) entre cette lame de raclage et la surface (S) de ladite pièce corresponde à la hauteur (H) souhaitée pour la couche de poudre (8).

3. Procédé selon la revendication 2, dans lequel la distance (d) entre la lame de raclage (25) et la surface (S) de ladite pièce (1) est réglable et dans lequel on règle cette distance (d) pour qu'elle corresponde la hauteur (H) souhaitée pour la couche de poudre (8).

4. Procédé selon l'une quelconque des revendications 1 à 3, dans lequel, après l'étape de soudage, on arase par usinage la pièce (1) dans la zone de rechargement (5).

5. Procédé selon l'une quelconque des revendications 1 à 4, dans lequel ledit cache (30) est une tôle en alliage d'aluminium.

6. Procédé selon l'une quelconque des revendications 1 à 5, dans lequel ladite pièce (1) est une pièce de turbomachine.

7. Procédé selon la revendication 6, dans lequel ladite pièce (1) est un carter de soufflante de turboréacteur.

8. Procédé selon la revendication 7, dans lequel on procède au rechargement dudit carter de soufflante sans démonter ce carter par rapport au reste du module de compresseur basse pression du turboréacteur.

## Claims

1. A method of building up an aluminum alloy part (1) by welding, in which:
. a mask (30) is used that is provided with an opening (32) having the same dimensions as the build-up zone (5) for building up said part (1);
. the mask (30) is positioned on said part (1) by causing said opening (32) to correspond with the build-up zone (5);
. a layer (8) of aluminum alloy powder is manually deposited on the part, in the build-up zone (5), by overlapping onto said mask (30) around said build-up zone (5) ;
. the height (H) of the powder layer is calibrated relative to the surface (S) of said part (1), with said height (H) being greater than the thickness of said mask (30); and
. said powder layer is welded onto said part by laser welding.

2. A method according to claim 1, in which the height (H) of the powder layer (8) is calibrated by means of a scraper (13) having at least one support foot (21) that is caused to rest on the surface (S) of said part (1), and a scraper blade (25) that is set back relative to the support foot so that the distance (d) between the scraper blade and the surface (S) of said part corresponds to the height (H) desired for the powder layer (8).

3. A method according to claim 2, in which the distance (d) between the scraper blade (25) and the surface (S) of said part (1) is adjustable, and in which said distance (d) is adjusted so that it corresponds to the height (H) desired for the powder layer (8).

4. A method according to any one of claims 1 to 3, in which, after the welding step, the part (1) is leveled by machining in the build-up zone (5).

5. A method according to any one of claims 1 to 4, in which said mask (30) is made of aluminum alloy sheet.

6. A method according to any one of claims 1 to 5, in which said part (1) is a turbomachine part.

7. A method according to claim 6, in which said part (1) is a turbojet fan casing.

8. A method according to claim 7, in which said fan casing is built up without removing said casing from the remainder of the low pressure compressor module of the turbojet.

## Patentansprüche

1. Verfahren zum Auftragsschweißen eines Teils (1) aus Aluminiumlegierung, bei dem:
- eine Abdeckmaske (30) verwendet wird, die mit einer Öffnung (32) mit gleichen Abmessungen wie ein Auffüllbereich (5) des Teils (1) versehen ist,
- die Abdeckmaske (30) auf dem Teil (1) so positioniert wird, daß die Öffnung (32) mit dem Auffüllbereich (5) übereinstimmt,
- eine Pulverschicht (8) aus Aluminiumlegierung auf dem Teil, im Auffüllbereich (5), unter Hinaustreten auf die Abdeckmaske (30) um den Auffüllbereich (5) herum, manuell abgeschieden wird,
- die Höhe (H) der Pulverschicht gegenüber der Oberfläche (S) des Teils (1) kalibriert wird, wobei diese Höhe (H) größer als die Dicke der Abdeckmaske (30) ist, und
- die Pulverschicht durch Laserschweißen auf das Teil aufgeschweißt wird.

2. Verfahren nach Anspruch 1, wobei die Höhe (H) der Pulverschicht (8) mittels eines Abstreichers (13) kalibriert wird, der wenigstens einen Stützfuß (21), welcher auf die Oberfläche (S) des Teils (1) aufgelegt wird, sowie eine gegenüber dem Stützfuß zurückspringende Abstreichklinge (25) aufweist, so daß der Abstand (d) zwischen dieser Abstreichklinge und der Oberfläche (S) des Teils der für die Pulverschicht (8) gewünschten Höhe (H) entspricht.

3. Verfahren nach Anspruch 2, wobei der Abstand (d) zwischen der Abstreichklinge (25) und der Oberfläche (S) des Teils (1) einstellbar ist und dieser Abstand (d) eingestellt wird, damit er der für die Pulverschicht (8) gewünschten Höhe (H) entspricht.

4. Verfahren nach einem der Ansprüche 1 bis 3, wobei nach dem Schweißschritt das Teil (1) in dem Auffüllbereich (5) auf Bündigkeit bearbeitet wird.

5. Verfahren nach einem der Ansprüche 1 bis 4, wobei die Abdeckmaske (30) ein Blech aus Aluminiumlegierung ist.

6. Verfahren nach einem der Ansprüche 1 bis 5, wobei das Teil (1) ein Teil einer Turbomaschine ist.

7. Verfahren nach Anspruch 6, wobei das Teil (1) ein Gebläsegehäuse eines Turbostrahltriebwerks ist.

8. Verfahren nach Anspruch 7, wobei das Auftragsschweißen des Gebläsegehäuses ohne Abmontieren dieses Gehäuses vom Rest des Niederdruckverdichtermoduls des Turbostrahltriebswerks durchgeführt wird.
